(19) Europäisches Patentamt
European Patent Office
Office européen des brevets

(11) **EP 4 148 824 A1**

(12) **EUROPEAN PATENT APPLICATION**
published in accordance with Art. 153(4) EPC

(43) Date of publication:
**15.03.2023 Bulletin 2023/11**

(21) Application number: **21923021.6**

(22) Date of filing: **27.09.2021**

(51) International Patent Classification (IPC):
**H01M 4/1393** (2010.01)    **H01M 4/583** (2010.01)
**H01M 10/058** (2010.01)

(52) Cooperative Patent Classification (CPC):
**H01M 4/1393; H01M 4/583; H01M 10/058**

(86) International application number:
**PCT/JP2021/035452**

(87) International publication number:
**WO 2022/163014 (04.08.2022 Gazette 2022/31)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **01.02.2021 PCT/JP2021/003588**

(71) Applicant: **Showa Denko Materials Co., Ltd.
Tokyo 100-6606 (JP)**

(72) Inventors:
• **MATSUMOTO, Yoshiyuki
Tokyo 100-6606 (JP)**
• **SAKAMOTO, Takashi
Tokyo 100-6606 (JP)**
• **UCHIYAMA, Yoshinori
Tokyo 100-6606 (JP)**
• **KUBOTA, Takashi
Tokyo 100-6606 (JP)**

(74) Representative: **Berggren Oy
P.O. Box 16
Eteläinen Rautatiekatu 10A
00101 Helsinki (FI)**

(54) **METHOD FOR MANUFACTURING NEGATIVE ELECTRODE MATERIAL FOR LITHIUM ION SECONDARY BATTERY AND METHOD FOR MANUFACTURING LITHIUM ION SECONDARY BATTERY**

(57) A method of manufacturing an anode material for a lithium-ion secondary battery includes (a) a step of obtaining a mixture containing a graphitizable aggregate, a graphitizable binder, and an aromatic compound; (b) a step of obtaining a molded product with a density of 1.3 g/cm$^3$ or less by molding the mixture; (c) a step of obtaining a graphitized product by graphitizing the molded product; and (d) a step of obtaining a ground product by grinding the graphitized product.

FIG.1

EP 4 148 824 A1

**Description**

Technical Field

The present invention relates to a method of manufacturing an anode material for a lithium-ion secondary battery, and a method of manufacturing a lithium-ion secondary battery.

Background Art

Because lithium-ion secondary batteries have a higher energy density than other secondary batteries such as nickel-cadmium batteries, nickel-hydride batteries, and lead-acid batteries, the lithium-ion secondary batteries are widely used as power sources for portable electrical appliances such as laptop computers and mobile phones. Furthermore, use of lithium-ion secondary batteries has been expected not only for relatively small electrical appliances but also for electric vehicles, power sources for power storage, and the like.

As a material (anode material) of an anode for a lithium-ion secondary battery, graphite is widely used. As the method of manufacturing the anode material using graphite, for example,

Patent Literature 1 describes the method of grinding a mixture obtained by mixing a carbon material, a binder, and the like, performing graphitization treatment in a state in which the obtained ground product is molded using a mold, and further grinding the obtained graphitized product.

[Prior Art Document]

[Patent Literature]

[Patent Literature] WO 2015/147012

SUMMARY OF INVENTION

Demand for lithium-ion secondary batteries for electrical appliances, electric vehicles, power sources for power storage, and the like has been increasing, and along with the demand, the lithium-ion secondary batteries excellent in cycle characteristics has been required.

The inventors have found that when molding a mixture containing a graphitizable aggregate and a graphitizable binder, it is possible to manufacture a lithium-ion secondary battery having excellent cycle characteristics by forming a molded product with a relatively low density.

However, in the case of forming a molded product with a relatively low density, the handleability in the subsequent graphitization treatment or the like deteriorates and therefore there is room for improvement in the moldability when forming the molded product.

In view of the above circumstances, the object of the present invention is to provide a method of manufacturing an anode material for a lithium-ion secondary battery, with excellent moldability when forming a molded product and capable of manufacturing a lithium-ion secondary battery and a method of manufacturing a lithium-ion secondary battery including the method of manufacturing the anode material.

Solution to Problem

Specific means for achieving the above-mentioned objective include the following aspects.

<1> A method of manufacturing an anode material for a lithium-ion secondary battery, the method comprising:

(a) a step of obtaining a mixture containing a graphitizable aggregate, a graphitizable binder, and an aromatic compound;
(b) a step of obtaining a molded product with a density of 1.3 g/cm$^3$ or less by molding the mixture;
(c) a step of obtaining a graphitized product by graphitizing the molded product; and
(d) a step of obtaining a ground product by grinding the graphitized product.

<2> The method of manufacturing an anode material for a lithium-ion secondary battery according to <1>, wherein the aromatic compound includes at least one compound selected from the group consisting of naphthalene, methylnaphthalene, acenaphthene, biphenyl, fluorene, benzopyrene, benzanthracene, dibenzanthracene, diphenylene oxide, quinoline and isoquinoline.

<3> The method of manufacturing an anode material for a lithium-ion secondary battery according to <1> or <2>, wherein a content of the aromatic compound in the mixture is from 1% by mass to 20% by mass with respect to a total of 100% by mass of the aggregate and the binder.

<4> The method of manufacturing an anode material for a lithium-ion secondary battery according to any one of <1> to <3>, wherein a content of the binder in the mixture is 25% by mass or less with respect to a total of 100% by mass of the aggregate and the binder.

<5> The method of manufacturing an anode material for a lithium-ion secondary battery according to any one of <1> to <3>, wherein a content of the binder in the mixture is 15% by mass or less with respect to a total of 100% by mass of the aggregate and the binder.

<6> The method of manufacturing an anode material for a lithium-ion secondary battery according to any one of <1> to <5>, wherein a content of the aromatic compound in the mixture is from 1.5% by mass to 20% by mass with respect to a total of 100% by mass of the aggregate and the binder.

<7> The method of manufacturing an anode material for a lithium-ion secondary battery according to any one of <1> to <6>, wherein a specific surface area of the ground product, which is an anode material for a lithium-ion secondary battery, is 2.8 m$^2$/g or less.

<8> A method of manufacturing a lithium-ion secondary battery, the method comprising a step of producing an anode by using an anode material obtained by the method of manufacturing an anode material for a lithium-ion secondary battery according to any one of <1> to <7>.

<9> A method of manufacturing a lithium-ion secondary battery, the method comprising: a step of manufacturing an anode material by the method of manufacturing an anode material for a lithium-ion secondary battery according to any one of <1> to <7>; and a step of producing an anode by using the anode material for a lithium-ion secondary battery.

Advantageous Effect of Invention

According to the present invention, a method of manufacturing an anode material for a lithium-ion secondary battery, with excellent moldability when forming a molded product and capable of manufacturing a lithium-ion secondary battery and a method of manufacturing a lithium-ion secondary battery including the method of manufacturing the anode material can be provided.

BRIEF DESCRIPTION OF DRAWINGS

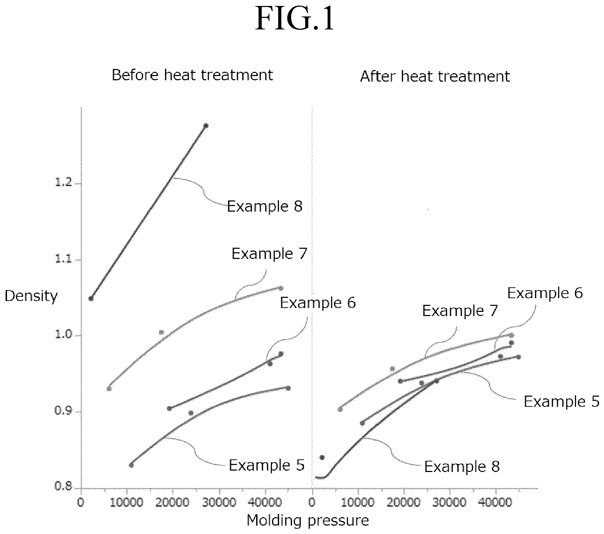

FIG. 1 is a graph showing a relationship between the densities of the molded products before the heat treatment and the densities of the molded products after the heat treatment when the molding pressure at the time of producing the molded products and the content rate of the methylnaphthalene-containing additive were changed in Examples 5 to 8.

DESCRIPTION OF EMBODIMENTS

Hereinafter, embodiments for carrying out the present invention will be described in detail. However, the present invention is not limited to the following embodiments. In the following embodiments, constituent elements (including element steps and the like) are not essential except for a case in which they are especially specified, a case in which they are considered clearly necessary in principle, or the like. The same applies to numerical values and a range thereof, which do not limit the present invention.

In the present disclosure, the term "step" means not only a step independent from other steps, but also a step that is not clearly distinguished from other steps as long as the purpose of the step is achieved.

In the present disclosure, a numerical value range expressed using "to" includes numerical values before and after "to" as a minimum value and a maximum value.

In stepwise numerical value ranges stated in the present disclosure, the upper limit value or the lower limit value stated in one numerical value range may be replaced with the upper limit value or the lower limit value of another stated stepwise numerical value range. In addition, in a numerical value range stated in the present disclosure, the upper limit value or the lower limit value of this numerical value range may be replaced with values shown in Examples.

Regarding each of components in the present disclosure, a plurality of substances corresponding thereto may be contained. In a case in which a plurality of substances corresponding to each of the components is present in a composition, a content rate or a content of each of the components means a total content rate or a total content of a plurality of substances corresponding thereto present in the composition unless otherwise specified.

Regarding each of components in the present disclosure, a plurality of types of particles corresponding thereto may be included. In a case in which a plurality of types of particles corresponding to each of the components is present in the composition, a particle size of each of the components means a value of a mixture of a plurality of types of particles corresponding thereto present in the composition unless otherwise specified.

In the present disclosure, the term "layer" refers to not only a case of being formed over the entire region but also a case of being formed only in a part of the region when observing the region in which the layer is present.

<Method of manufacturing anode material for lithium-ion secondary battery>

A method of manufacturing anode material for lithium-ion secondary battery (hereinafter, also referred to as anode material) of the present disclosure includes:

(a) a step of obtaining a mixture containing a graphitizable aggregate, a graphitizable binder, and an aromatic compound;

(b) a step of obtaining a molded product with a density of 1.3 g/cm$^3$ or less by molding the mixture;

(c) a step of obtaining a graphitized product by graphitizing the molded product; and

(d) a step of obtaining a ground product by grinding the graphitized product.

Each step in the above method may be performed continuously or not continuously. Each step of the above method may be performed at the same place or at a different place.

In a comparative method to the manufacturing method of the present disclosure, a mixture containing a graphitizable aggregate, and a graphitizable binder, and not containing an aromatic compound was used, and the mixture was molded to obtain a molded product with the density of 1.3 g/cm$^3$ or less. In this comparative method, when obtaining a molded product with a relatively low density, the problem of appearance deterioration of the molded product occurs, and there is a problem of handleability in the subsequent graphitization treatment or the like.

On the other hand, in the manufacturing method of the present disclosure, after obtaining a mixture containing a graphitizable aggregate, a graphitizable binder, and an aromatic compound, the mixture was molded to obtain a molded product with the density of 1.3 g/cm$^3$ or less. In the manufacturing method of the present disclosure, the mixture containing an aromatic compound is used as the mixture for forming a molded product. As a result, the appearance of the molded product is improved, and the strength of the molded product is also improved, so that the handleability in the subsequent graphitization treatment or the like is also improved. Therefore, in the manufacturing method of the present disclosure, good moldability is obtained when forming a molded product. Conventionally, when green coke was used, it was difficult to mold, and it was necessary to improve the moldability by heat-treating the green coke. On the other hand, in the manufacturing method of the present disclosure, even when green coke is used without being heat-treated, a molded product that is easy to handle can be obtained. Therefore, in the manufacturing method of the present disclosure, as the graphitizable aggregate, green coke that has been heat-treated may be used to form the molded product, or green coke that has not been heat-treated may be used to form the molded product.

The reason why the appearance of the molded product is improved and the strength of the molded product is improved by using a mixture containing an aromatic compound for forming the molded product is presumed as follows.

(1) By adding liquid of an aromatic compound to a mixture containing a graphitizable aggregate, the surface of the graphitizable aggregate becomes slippery during molding of the mixture, and the mixture is arranged and voids are reduced. (2) A graphitizable binder is dissolved in the mixture and the binder is dispersed with high uniformity. It is considered that the above (1) and (2) improve the appearance of the molded product and also improve the strength of the molded product.

Furthermore, in the manufacturing method of the present disclosure, there is a tendency that after obtaining the molded product with a relatively low density, the molded product is graphitized, and then the graphitized product is ground to produce a lithium-ion secondary battery with excellent cycle characteristics. This reason is presumed as follows. In the manufacturing method of the present disclosure, the graphitized product can be ground more easily than when grinding the graphitized product obtained by using a molded product with a relatively high density, and as a result, a ground product with a small specific surface area can be obtained. By using an anode material containing a ground product having a small specific surface area for manufacturing a lithium-ion secondary battery, the contact area between the anode material and an electrolytic solution can be reduced. Thereby, the decomposition reaction of the electrolytic solution is reduced, and the life of the battery can be lengthened. As a result, the cycle characteristics of the lithium-ion secondary battery are excellent.

In the step (a), the mixture containing the graphitizable aggregate, the graphitizable binder and the aromatic compound is obtained. The method of obtaining the mixture is not particularly limited, and the method can be performed using a kneader or the like. The mixing is preferably performed at a temperature at which the graphitizable binder softens. Specifically, in a case in which the graphitizable binder is pitch, tar or the like, the temperature may be from 50°C to 300°C, and in a case in which the graphitizable binder is a thermosetting resin, the temperature may be from 20°C to 100°C.

The graphitizable aggregate is not particularly limited as long as it is graphitized by graphitization treatment. Specific examples thereof include coke such as fluid coke, needle coke, and mosaic coke, among them, from the viewpoint of enabling to easily grind the graphitized product by reducing the increase in the density of the graphitized product manufactured, the needle coke is preferably used. The graphitizable aggregate is preferably in the form of particles.

For example, The average particle size of the graphitizable aggregate is preferably from 5 $\mu$m to 40 $\mu$m, more preferably from 8 $\mu$m to 30 $\mu$m, and still more preferably from 8 $\mu$m to 25 $\mu$m. The average particle size is, for example, a volume average particle size (D50) measured by a laser diffraction/scattering method described below. The volume average particle size (D50) means a particle size at cumulative 50% when drawing a volume cumulative distribution curve from the small particle size side in the particle size distribution.

For example, the standard deviation of the particle size distribution of the graphitizable aggregate is preferably 0.20 or less, more preferably 0.18 or less, and still more preferably 0.16 or less. When the above-mentioned standard deviation of the particle size distribution of the aggregate is 0.20 or less, variation in the particle size of the aggregate is reduced, and variation in the particle size of the obtained ground product is also reduced. By using the anode material, which includes the ground product with small variation in the particle size, in the production of a lithium-ion secondary battery, the resistance distribution in the anode can be made uniform, and as a result, the quick charging performance of the lithium-ion secondary battery tends to improve. Further, by reducing the variation in the particle size of the aggregate, the function as a binder can be suitably secured, even if a content rate or a content of the graphitizable binder is reduced. The standard deviation of the particle size distribution is, for example, a value (volume basis) measured by the laser diffraction/scattering method.

The lower limit of the standard deviation of the particle size distribution of the graphitizable aggregate is not particularly limited, and for example, may be 0.05 or more, or may be 0.10 or more.

Examples of methods of adjusting the average particle size of the graphitizable aggregate and the standard deviation of the particle size distribution of the graphitizable aggregate to the above-mentioned ranges include sieve classification, wind power classification, wet classification and the like.

The graphitizable binder is not particularly limited as long as it is graphitized by graphitization treatment. Specifically, examples thereof include coal-based, petroleum-based, or artificial pitches and tars, thermoplastic resins, thermosetting resins and the like.

The content rate of the graphitizable binder in the mixture is preferably 25% by mass or less, more preferably 20% by mass or less, still more preferably 19% by mass or less, particularly preferably 18% by mass or less, and extremely preferably 15% by mass or less, with respect to a total of 100% by mass of the aggregate and the binder. The content rate of the graphitizable binder in the mixture is preferably 5% by mass or more with respect to a total of 100% by mass of the aggregate and the binder. When the content rate of the binder is 5% by mass or more, it tends to suitably function as the graphitizable binder. When the content rate of the binder is 25% by mass or less, a sufficient amount of fixed carbon in the mixture is secured, and therefore the yield tends to be excellent, and battery characteristics such as the initial charge and discharge efficiency of the anode material also tend to be good. Further, as the content rate of the binder decreases, there is a tendency that it is possible to grind the graphitized product easily by preventing the increase in the density of the graphitized product manufactured.

The graphitizable aggregate and the graphitizable binder contained in the mixture may be only one component or two or more components, respectively.

The aromatic compound is not particularly limited as long as it is a compound having an aromatic ring. The aromatic compound may be a compound having an aromatic ring and a molecular weight of 500 or less or may be a compound having an aromatic ring and a molecular weight of 300 or less.

Examples of the aromatic compound include naphthalene, methylnaphthalene such as 1-methylnaphthalene, 2-methylnaphthalene or the like, acenaphthene, biphenyl, fluorene, benzopyrene, benzanthracene, dibenzanthracene, diphenylene oxide, quinoline, isoquinoline and the like.

The aromatic compound contained in the mixture may be only one component or two or more components.

Among them, the aromatic compound is preferably methylnaphthalene, naphthalene or the like from the viewpoint of moldability when molding the molded product.

The content rate of the aromatic compound in the mixture is preferably from 1 % by mass to 20 % by mass, more preferably from 1.5 % by mass to 20 % by mass, still more preferably from 2 % by mass to 18 % by mass and particularly preferably from 3 % by mass to 15 % by mass with respect to a total of 100 % by mass of the aggregate and the binder.

The mixture may contain another component other than the graphitizable aggregate, the graphitizable binder, or the aromatic compound. Examples of another component include graphite, a dispersant, and a graphitization catalyst.

The mixture may contain the graphite. Examples of the graphite include natural graphite and artificial graphite. The graphite is preferably in the form of particles. The mixture may contain only one type of graphite, or may contain two or more types of graphite.

The mixture preferably contains the dispersant from the viewpoint of easily dispersing the components in the mixture in the step (b). When the mixture contains the dispersant, the variation in the particle size of the ground product obtained by grinding the graphitized product can be reduced, and the ground product whose particle size is made uniform can be easily obtained. As a result, the quick charging performance of the lithium-ion secondary battery tends to improve.

Further, the inclusion of the dispersant in the mixture leads to a reduction in the amount of the graphitizable binder, and can be expected to improve battery characteristics such as the initial charge and discharge efficiency of the anode material.

The type of the dispersant is not particularly limited. Specific examples thereof include hydrocarbons such as liquid paraffin, paraffin wax, and polyethylene wax; fatty acids such as stearic acid, oleic acid, erucic acid, and 12-hydroxystearic acid; fatty acid metal salts such as zinc stearate, lead stearate, aluminum stearate, calcium stearate, and magnesium stearate; fatty acid amides such as stearic acid amides, oleic acid amides, erucic acid amides, methylenebisstearic acid amides, and ethylenebisstearic acid amides; fatty acid esters such as stearic acid monoglyceride, stearyl stearate, and hardened oils; higher alcohols such as stearyl alcohol and the like. Among them, fatty acids are preferable, and stearic acid is more preferable, from the viewpoint that they are less likely to affect the performance of the anode material, are easily handled because they are solid at room temperature, are uniformly dispersed to dissolve at the temperature in the step (a), disappear in a process before graphitization treatment, and are inexpensive.

In a case in which the mixture contains the dispersant, the amount thereof is not particularly limited. For example, the content rate of the dispersant with respect to the whole mixture may be from 0.1% by mass to 20% by mass, may be from 0.5% by mass to 10% by mass, or may be from 0.5% by mass to 5% by mass.

The mixture preferably contains the graphitization catalyst from the viewpoint of promoting the graphitization of the graphitizable aggregate or the graphitizable binder. The type of the graphitization catalyst is not particularly limited. Specifically, examples of the graphitization catalysts include substances having a graphitization catalyst action such as silicon, iron, nickel, titanium, and boron; and carbides, oxides, and nitrides of these substances.

In a case in which the mixture contains the graphitization catalyst, the amount thereof is not particularly limited. For example, the content rate of the graphitization catalyst with respect to the whole mixture may be from 0.1% by mass to 50% by mass, may be from 0.5% by mass to 40% by mass, or may be from 0.5% by mass to 30% by mass.

In the step (b), the mixture obtained in the step (a) is molded to obtain the molded product. Preferably, the mixture may be formed into a predetermined shape by a uniaxial press or the like. By molding in this way, it is possible to increase a filling amount in a graphitizing furnace, when graphitizing the mixture, to improve productivity and to improve the effect of the graphitization catalyst.

In the step (b), the method of molding the mixture is not particularly limited. Examples of the method include a molding method in which the mixture is placed in a container such as a mold and pressed in a uniaxial direction, a vibration molding method in which the mixture is placed in a container such as a mold, a heavy weight is placed on the upper surface, and vibration and impact are applied to the mold, and an extrusion molding method in which the mixture is extruded from a nozzle or the like with a horizontal push press.

In the step (b), the density of the obtained molded product is 1.3 g/cm$^3$ or less, from the viewpoint of the productivity of the anode material and the cycle characteristics of the lithium-ion secondary battery, the density is preferably from 0.8 g/cm$^3$ to 1.3 g/cm$^3$, more preferably from 1.0 g/cm$^3$ to 1.25 g/cm$^3$, and still more preferably from 1.05 g/cm$^3$ to 1.2 g/cm$^3$. Thereby, after obtaining the molded product with a relatively low density, the thus obtained molded product is graphitized, and then the graphitized product can be ground. In this case, the graphitized product can be ground more easily than in a case in which the graphitized product obtained by using the molded product with a relatively high density is ground. As a result, there is a tendency that the ground product with a low specific surface area can be obtained. By using the anode material including the ground product with a low specific surface area for the production of the lithium-ion secondary battery, a contact area of the anode material with the electrolytic solution can be reduced. Thereby, there is a tendency that the decomposition reaction of the electrolytic solution can be reduced to make the battery life long, and the lithium-ion secondary battery excellent in the cycle characteristics can be manufactured.

Heat treatment is preferably performed on the molded product obtained in the step (b) before the molded product is graphitized in the step (c). By performing the heat treatment, an organic component that is contained in the mixture and that does not contribute to the graphitization is removed, and gas generation in the graphitization treatment or the like tends to be reduced.

The temperature of the above-mentioned heat treatment is not particularly limited, and is preferably lower than a heat treatment temperature in the step (c). For example, the above-mentioned heat treatment may be performed in the range of 500°C to 1000°C.

In the step (c), the mold product obtained in the step (b) is graphitized. A method of graphitizing the mold product is not particularly limited as long as the graphitizable components contained in the mixture can be graphitized.

For example, a method of heat-treating the mixture in an atmosphere in which the mixture is difficult to oxidize can be mentioned. The atmosphere in which the mixture is difficult to oxidize is not particularly limited, and examples thereof include inert atmospheres such as nitrogen and argon, and vacuum.

For example, the temperature of the heat treatment for the graphitization may be 1500°C or more, may be 2000°C or more, may be 2500°C or more, or may be 2800°C or more. The upper limit of the temperature of the heat treatment is not particularly limited, and for example, may be 3200°C or less. When the temperature of the heat treatment is 1500°C or more, the graphitization tends to proceed easily due to changes in crystals. When the temperature of the heat treatment is 2000°C or more, graphite crystals tend to develop better. On the other hand, when the temperature of the heat treatment for the graphitization is 3200°C or less, sublimation of a part of the graphite tends to be reduced.

In the step (d), the graphitized product obtained in the step (c) is ground to obtain the ground product. The methods of the grinding is not particularly limited, and the grinding can be performed by a known method using a jet mill, a vibration mill, a pin mill, a hammer mill or the like. The ground product may be adjusted in particle size so as to have a desired size. A method of adjusting the particle size is not particularly limited, and examples thereof include a method using the above-mentioned grinding device, a method using a sieve and the like.

As necessary, (e) a step of disposing low crystalline carbon on at least a part of the surface of the ground product, (f) a step of mixing the ground product with another anode active material, or the like may be performed to the ground product obtained in the step (d).

Examples of a method of disposing the low crystalline carbon on at least a part of the surface of the ground product in the step (e) include a method of mixing a material capable of being the low crystalline carbon by heat treatment (resin or the like) and the ground product and heat-treating the mixture. In a case in which the low crystalline carbon is disposed on at least a part of the surface of the ground product, input and output characteristics such as rapid charge and discharge characteristics of the lithium-ion secondary battery in which the ground product is used as the anode material tend to be improved.

In the step (f), the method of mixing the ground product with another anode active material is not particularly limited. By mixing the ground product with another anode active material, the desired characteristics of the lithium-ion secondary battery can be improved as compared with the case in which only the ground product is used as the anode active material. Examples of another anode active material include graphite particles such as natural graphite and artificial graphite, particles containing an element capable of occluding and releasing lithium-ions and are not limited to the above. The element capable of occluding and releasing lithium-ions are not particularly limited, and examples thereof include Si, Sn, Ge, In and the like.

The ground product obtained in the step (f) may include particles in a state in which a plurality of the flat graphite particles is aggregated or bonded, or may include particles (hereinafter, also referred to as graphite secondary particles) in a state in which a plurality of the flat graphite particles is aggregated or bonded such that main surfaces of the flat graphite particles are not parallel to each other.

In a case in which the ground product is in a state of the graphite secondary particles, the phenomenon that the particles of the anode material are oriented along the direction of a current collector when the press is performed to increase the density of the anode, is prevented, and the path of lithium-ions entering and exiting from the anode material tends to be sufficiently secured.

Further, by including the particles in a state in which a plurality of the flat graphite particles is aggregated or bonded, voids between a plurality of the flat graphite particles reduce the effect of pressure applied during pressing to individual graphite particles and disruption of the graphite particles, generation of cracks, or the like tends to be prevented.

In the present disclosure, "the flat graphite particles" refers to non-spheroidal graphite particles having anisotropy in shape. Examples of the flat graphite particles include graphite particles having a scaly shape, a flaky shape, a partially lumpy shape, or the like.

The aspect ratio represented by A/B of the flat graphite particles is preferably, for example, from 1.2 to 20, and is more preferably from 1.3 to 10 when A is a length in a major axis direction and B is a length in a minor axis direction. When the aspect ratio is 1.2 or more, a contact area between particles increases, and conductivity tends to be further improved. When the aspect ratio is 20 or less, input and output characteristics such as rapid charge and discharge characteristics of the lithium-ion secondary battery tend to be further improved.

The aspect ratio is obtained by observing graphite particles with a microscope, arbitrarily selecting 100 graphite particles, measuring A/B of each of the selected particles, and obtaining an arithmetic mean value of the measured values. In observing the aspect ratio, the length A in the major axis direction and the length B in the minor axis direction are measured as follows. That is, in a projected image of graphite particles that is observed using a microscope, two parallel tangent lines circumscribing the outer periphery of the graphite particles, which are a tangent line a1 and a tangent line a2 having a maximum distance therebetween, are selected, and a distance between the tangent line a1 and the tangent line a2 is defined as the length A in the major axis direction. In addition, two parallel tangent lines circumscribing the outer periphery of the graphite particles, which are a tangent line b1 and a tangent line b2 having a minimum distance, are selected, and a distance between the tangent line b1 and the tangent line b2 is defined as the length B in the minor axis direction.

In the present disclosure, the phrase "main surfaces are not parallel" regarding the graphite secondary particles means that the largest cross-sectional surfaces (the main surfaces) of a plurality of the flat graphite particles are not aligned in a certain direction. Whether or not the main surfaces of a plurality of flat graphite particles are not parallel to each other can be confirmed by microscopic observation. When a plurality of flat graphite particles is aggregated or bonded in a state in which the main surfaces of the graphite secondary particles are not parallel to each other, an increase in an orientation index of the main surfaces of the flat graphite particles in the anode is prevented, expansion of the anode due to charging is prevented, and thereby cycle characteristics of the lithium-ion secondary battery tend to be improved.

Graphite secondary particles may partially include a structure in which a plurality of the flat graphite particles is aggregated or bonded such that the main surfaces of the flat graphite particles are parallel to each other.

In the present disclosure, the phrase "state of being aggregated or bonded" regarding a plurality of the flat graphite particles means a state in which two or more flat graphite particles are aggregated or bonded. The term "bonded" means a state in which particles are chemically bonded to each other directly or via a carbon substance. The term "aggregated" means a state in which particles are not chemically bonded to each other, but a shape of an aggregate is maintained due to a shape thereof. The flat graphite particles may be aggregated or bonded via a carbon substance. Examples of carbon substances include a graphitized product of the graphitizable binder. A state in which the two or more flat graphite particles are bonded via the carbon substance is preferable from the viewpoint of mechanical strength. Whether or not the flat graphite particles are aggregated or bonded can be confirmed by, for example, observation with a scanning electron microscope.

For example, the average particle size of the flat graphite particles is preferably from 1 $\mu$m to 50 $\mu$m, more preferably from 1 $\mu$m to 25 $\mu$m, and still more preferably from 1 $\mu$m to 15 $\mu$m, from the viewpoint of ease of aggregation or bonding. Examples of a method of measuring the average particle size of the flat graphite particles includes a method of measuring it with a scanning electron microscope, and for example the average particle size of the flat graphite particles is an arithmetic mean value of the particle sizes of 100 graphite particles.

The flat graphite particles and the raw material thereof are not particularly limited and examples thereof include artificial graphite, scaly natural graphite, flaky natural graphite, coke, resin, tar, pitch and the like. Among them, graphite obtained from artificial graphite, natural graphite, or coke has high crystallinity and becomes soft particles, so that the density of the anode tends to be easily increased.

The anode material may include spheroidal graphite particles. In a case in which the anode material includes spheroidal graphite particles, because the spheroidal graphite particles themselves have a high density, there is a tendency to reduce the press pressure required to obtain a desired electrode density.

Examples of the spheroidal graphite particles include spheroidal artificial graphite, spheroidal natural graphite and the like. The spheroidal graphite particles are preferably high density graphite particles from the viewpoint of densification of the anode. Specifically, the spheroidal graphite particles that have been subjected to particle spheroidization treatment to increase the tap density are preferable. Further, there is a tendency that the anode material layer containing the spheroidal natural graphite is excellent in peeling strength, and is less likely to peel off from a current collector even if the layer is pressed with strong strength.

In a case in which the anode material includes the spheroidal graphite particles, the anode material may include the above-mentioned flat graphite particles and the spheroidal graphite particles. In a case in which the anode material includes the above-mentioned flat graphite particles and the spheroidal graphite particles, the ratio of the two kinds of particles is not particularly limited, and can be set according to a desired electrode density, pressure conditions at the time of pressing, desired battery characteristics, or the like.

Examples of a case in which the anode material includes the flat graphite particles and the spheroidal graphite particles include a state in which the flat graphite particles and the spheroidal graphite particles are mixed, a state in which the flat graphite particles and the spheroidal graphite particles are bonded (hereinafter, also referred to as composite particles). Examples of the composite particles include particles in a state in which the flat graphite particles and the spheroidal graphite particles are bonded via an organic carbide.

For example, the above-mentioned composite particles can be manufactured by using a mixture containing the flat graphite particles or the raw material thereof and the spheroidal graphite particles as the mixture in the step (a).

The average particle size of the anode material manufactured by the above-mentioned method is not particularly limited. For example, the average particle size is preferably from 5 $\mu$m to 40 $\mu$m, more preferably from 10 $\mu$m to 30 $\mu$m, and still more preferably from 10 $\mu$m to 25 $\mu$m. For example, the average particle size of the anode material may be measured by a scanning electron microscope in the same manner as the average particle size of the above-mentioned flat graphite particles or may be a volume average particle size (D50) measured by the laser diffraction/scattering method.

Examples of methods of measuring the average particle size in a case in which an electrode (anode) is manufactured using the anode material, include a method in which a sample electrode is produced, and this electrode is embedded in an epoxy resin and then mirror-polished to observe an electrode cross-sectional surface with a scanning electron microscope (for example, "VE-7800" manufactured by KEYENCE CORPORATION), and a method in which an electrode cross-sectional surface is produced using an ion milling device (for example, "E-3500" manufactured by Hitachi High-Tech Corporation) and the average particle size is measured with a scanning electron microscope (for example, "VE-7800" manufactured by KEYENCE CORPORATION). The average particle size in this case is a median value of 100 particle sizes arbitrarily selected from the observed particles.

For example, the above-mentioned sample electrode can be produced in the following method. A mixture of 98 parts by mass of the anode material, 1 part by mass of styrene-butadiene resin as a binder, and 1 part by mass of carboxymethyl cellulose as a thickener is used as a solid content, and water is added thereto to prepare a dispersion liquid. The sample electrode is produced by applying the dispersion liquid onto a copper foil having a thickness of 10 $\mu$m so as to have a thickness of about 70 $\mu$m (at the time of coating), and then drying at 105°C for 1 hour.

The orientation index of the anode (in a case in which the production of the anode involves a pressing process, the anode after pressing) made of the anode material may be 40 or less, may be 20 or less, or may be 15 or less. The above-mentioned orientation index may be 10 or more.

The orientation index of the anode material is an index showing the degree of orientation of particles of the anode material contained in the anode. A low orientation index means that the particles of the anode material are oriented in random directions. That is, this means that graphite particles are prevented from being oriented along a surface of the current collector by a pressure at the time of pressing.

In the present disclosure, the orientation index of the anode is determined by measuring a surface of a sample electrode by an X-ray diffractometer using Cu K$\alpha$ rays as an X-ray source. Specifically, an X-ray diffraction pattern is measured for the surface of the sample electrode, and the orientation index is determined from an intensity of a carbon (004) plane diffraction peak detected at around a diffraction angle of $2\theta = 53°$ to $56°$ and a carbon (110) plane diffraction peak detected at around a diffraction angle of $2\theta = 70°$ to $80°$ by Formula (1).

$$\text{(004) plane diffraction peak intensity} / \text{(110) plane diffraction peak intensity} \ldots \text{Formula (1)}$$

The specific surface area of the anode material is preferably 3.0 m$^2$/g or less, more preferably 2.8 m$^2$/g or less, still more preferably from 0.5 m$^2$/g to 2.5 m$^2$/g, and particularly preferably from 0.7 m$^2$/g to 2.0 m$^2$/g, from the viewpoint of the cycle characteristics and preservation characteristics.

The specific surface area of the anode material may be determined by the following method. A mixed gas of nitrogen and helium (nitrogen: helium = 3: 7), and a specific surface area/pore distribution measuring device (for example, Flowsorb III 2310, Shimadzu Corporation) are used and nitrogen adsorption at the liquid nitrogen temperature (77K) is measured by a one-point method with a relative pressure of 0.3 to determine the specific surface area by a BET method.

<Method of manufacturing lithium-ion secondary battery>

A first embodiment of a method of manufacturing a lithium-ion secondary battery of the present disclosure includes a step of producing an anode by using an anode material obtained by the above-mentioned method of manufacturing the anode material.

A second embodiment of a method of manufacturing a lithium-ion secondary battery of the present disclosure includes a step of manufacturing an anode material by the above-mentioned method of manufacturing the anode material; and a step of producing an anode by using the anode material.

The method of manufacturing the anode using the anode material is not particularly limited. For example, a method of forming the anode material layer on the current collector using a composition containing the anode material, the binder, and a solvent, and if necessary, performing heat treatment, pressing, or the like, can be mentioned.

The binder contained in the composition is not particularly limited. Examples thereof include styrene-butadiene rubber; polymer compounds in which an ethylenically unsaturated carboxylic acid ester (methyl (meth)acrylate, ethyl (meth)acrylate, butyl (meth)acrylate, hydroxyethyl (meth)acrylate, or the like) is used as a polymerization component; polymer compounds in which an ethylenically unsaturated carboxylic acid (acrylic acid, methacrylic acid, itaconic acid, fumaric acid, maleic acid, or the like) is used as a polymerization component; and polymer compounds such as polyvinylidene fluoride, polyethylene oxide, polyepichlorohydrin, polyphosphazene, polyacrylonitrile, polyimide, and polyamideimide. In the present disclosure, (meth)acrylate means either of methacrylate or acrylate, or both of methacrylate and acrylate.

The solvent contained in the composition is not particularly limited. Specifically, an organic solvent such as N-methylpyrrolidone, dimethylacetamide, dimethylformamide, $\gamma$-butyrolactone or the like; or water is used.

The composition may contain a thickener for adjusting a viscosity, if necessary. Examples of the thickeners include carboxymethyl cellulose, methyl cellulose, hydroxymethyl cellulose, ethyl cellulose, polyvinyl alcohol, polyacrylic acid and salts thereof, oxidized starch, phosphorylated starch, casein and the like.

The composition may contain a conductive auxiliary agent, if necessary. Examples of the conductive auxiliary agents include carbon black, graphite, acetylene black, conductive oxides, conductive nitrides and the like.

A material and a shape of the current collector used in the production of the anode are not particularly limited. For example, it is possible to use a material such as a strip-shaped foil, a strip-shaped perforated foil, or a strip-shaped mesh made of a metal or alloy such as aluminum, copper, nickel, titanium, or stainless steel. Furthermore, it is also possible to use a porous material such as a porous metal (foamed metal) or carbon paper.

A method of forming the anode material layer on the current collector using the composition is not particularly limited, and it can be performed by a known method such as a metal mask printing method, an electrostatic coating method, a dip coating method, a spray coating method, a roll coating method, a doctor blade method, a gravure coating method, or a screen printing method. In a case of integrating the anode material layer and the current collector, it can be performed by a known method such as rolling, pressing, or a combination thereof.

After forming the anode material layer on the current collector, heat treatment (drying) may be performed. By the heat treatment, the solvent contained in the anode material layer is removed, the strength of the anode material layer is increasing due to the hardening of the binder, and adhesiveness between particles and between the particles and the current collector can be improved. The heat treatment may be performed in an inert atmosphere of helium, argon, nitrogen, or the like or in a vacuum atmosphere in order to prevent oxidation of the current collector during the treatment.

After forming the anode material layer on the current collector, press treatment may be performed. By the press treatment, the electrode density of the anode can be adjusted. The electrode density of the anode is not particularly limited, and may be from 1.5 g/cm$^3$ to 1.9 g/cm$^3$, or may be from 1.6 g/cm$^3$ to 1.8 g/cm$^3$. As the electrode density becomes higher, a volume capacity of the anode tends to be improved, adhesiveness of the anode material layer to the current collector tends to be improved and the cycle characteristics tend to be improved. The press treatment is preferably performed before performing the heat treatment.

A lithium-ion secondary battery manufactured by the above-mentioned method may include; the anode produced by the above-mentioned method; a cathode; and an electrolyte. The lithium-ion secondary battery may be configured, for example, so that the anode and the cathode are disposed to face each other with a separator interposed therebetween, and an electrolytic solution containing an electrolyte is injected.

The cathode may be an electrode manufactured by forming a cathode layer on a surface of the current collector in the same manner as the anode. As the current collector, it is possible to use a material such as a strip-shaped foil, a strip-shaped perforating foil, or a strip-shaped mesh made of a metal or alloy such as aluminum, titanium, or stainless steel.

A cathode material included in the cathode layer is not particularly limited. Examples thereof include metal compounds, metal oxides, metal sulfides, and conductive polymer materials which can be doped or intercalated with lithium-ions. Furthermore, it is possible to use one or two or more kinds in combination from lithium cobalt oxide (LiCoO$_2$), lithium nickel oxide (LiNiO$_2$), lithium manganate (LiMnO$_2$), and complex oxides thereof (LiCo$_x$Ni$_y$Mn$_z$O$_2$, x + y + z = 1, 0 < x, 0 < y; LiNi$_{2-x}$Mn$_x$O$_4$, 0 < x $\leq$ 2), lithium manganese spinel (LiMn$_2$O$_4$), lithium vanadium compounds, V$_2$O$_5$, V$_6$O$_{13}$, VO$_2$, MnO$_2$, TiO$_2$, MoV$_2$O$_8$, TiS$_2$, V$_2$S$_5$, VS$_2$, MoS$_2$, MoS$_3$, CriOs, Cr$_2$O$_5$, olivine type LiMPO$_4$ (M: Co, Ni, Mn, Fe), conductive polymers such as polyacetylene, polyaniline, polypyrrole, polythiophene, and polyacene, porous carbon, and the like. Among them, lithium nickel oxide (LiNiO$_2$) and a complex oxide thereof (LiCo$_x$Ni$_y$Mn$_z$O$_2$, x + y + z = 1, 0 < x, 0 < y; LiNi$_{2-x}$Mn$_x$O$_4$, 0 < x $\leq$ 2) have a high capacity, and thus are suitable as cathode materials.

Examples of separators include non-woven fabrics, cloth, microporous film, and a combination thereof that contain a polyolefin such as polyethylene or polypropylene as a main component. When the lithium-ion secondary battery has a structure in which the cathode and the anode are not in contact with each other, it is not necessary to use the separator.

As the electrolytic solution, it is possible to use so-called organic electrolyte solutions in which a lithium salt such as LiClO$_4$, LiPF$_6$, LiAsF$_6$, LiBF$_4$, or LiSO$_3$CF$_3$ is dissolved in a nonaqueous solvent containing a single component or a mixture of two or more components such as ethylene carbonate, propylene carbonate, butylene carbonate, vinylene carbonate, fluoroethylene carbonate, cyclopentanone, sulfolane, 3-methylsulfolane, 2,4-dimethylsulfolane, 3-methyl-1,3-oxazolidin-2-one, $\gamma$-butyrolactone, dimethyl carbonate, diethyl carbonate, ethyl methyl carbonate, methyl propyl carbonate, butyl methyl carbonate, ethyl propyl carbonate, butyl ethyl carbonate, dipropyl carbonate, 1,2-dimethoxyethane, tetrahydrofuran, 2-methyltetrahydrofuran, 1,3-dioxolane, methyl acetate, and ethyl acetate. Among them, the electrolytic solution containing fluoroethylene carbonate is suitable because it tends to form a stable SEI (solid electrolyte interface) on a surface of the anode material and the cycle characteristics is significantly improved.

A form of the lithium-ion secondary battery is not particularly limited, and examples thereof include a paper type battery, a button type battery, a coin type battery, a laminate type battery, a cylindrical type battery, a prismatic battery and the like. Furthermore, the anode material for lithium-ion secondary battery can be applied not only to the lithium-ion secondary battery, but also to all electrochemical devices other than the lithium-ion secondary battery such as a hybrid capacitor having a charging and discharging mechanism that inserts and desorbs lithium-ions.

EXAMPLES

Hereinafter, the above-mentioned embodiment will be described more specifically based on examples, but the above-mentioned embodiments are not limited to the following examples.

[Example 1]

(1) Formation of molded product

Calcined needle coke as the raw material was finely ground using a free grinder mill manufactured by Nara Machinery Co., Ltd, and then wind-classified using Turboplex (registered trademark) manufactured by HOSOKAWA MICRON CORPORATION to prepare the aggregate shown below. Further, the materials shown below were used as the raw materials. The average particle sizes of the aggregate and the anode materials, and the standard deviation of the particle size distribution of the aggregate were measured by using the particle size distribution measuring device (Shimadzu Corporation, SALD-3000) using the laser diffraction/scattering method. The standard deviation of the particle size distribution of the aggregate was the standard deviation defined on the logarithmic scale.

Aggregate 1: Needle coke with average particle size of 14 $\mu$m and standard deviation of particle size distribution of 0.15
Binder: Tar pitch
Aromatic compound: Methylnaphthalene-containing additive (total content rate of aromatic compound: 77% by mass or more)
Dispersant: Stearic acid

(Evaluation of test force at crushing)

The test force at crushing (N) of a test piece was measured as follows.
Specifically, using 10 g of the mixture having the composition shown in Table 1, a test piece having a long side of 52.1 mm and a short side of 11.4 mm was prepared under the condition of a surface pressure of 75.8 MPa at room temperature. The obtained density (g/cm$^3$) of the test piece is shown in Table 1. Using the prepared test piece and an autograph manufactured by Shimadzu Corporation, a three-point bending test was performed under the conditions of a test speed of 10 mm/min and a distance between fulcrums of 7 mm to measure the test force (N) at crushing.
The result is shown in Table 1.

(Evaluation of moldability)

The molded product obtained in Example 1 was evaluated for moldability based on the following evaluation criteria. Moldability is so favorable that a numerical value is high.
The result is shown in Table 1.

-Evaluation Criteria-

1: It disintegrated easily when touched with a hand, and handling was impossible.
2: It was easily peeled off when touched with a hand, and handling was impossible.
3: Handing was possible, but it was brittle and easily crumbled when lifted by hands.
4: Handing was possible, and it did not crumble even when lifted by hands, but the surface was easy to peel off.
5: Handing was possible, and even if it was lifted by hands, it did not crumble easily and the surface did not peel off.

[Comparative Example 1]

The molded product was obtained in the same manner as in Example 1 except that the aromatic compound was not used. Further, the evaluation of the test force at crushing and the evaluation of the moldability were performed in the same manner as in Example 1.
The results are shown in Table 1.
In Comparative Example 1, the density of the test piece could not be evaluated because the block-shaped molded product could not be formed successfully.

[Comparative Example 2]

The molded product was obtained in the same manner as in Example 1 except that water was used instead of the aromatic compound. Further, the evaluation of the test force at crushing and the evaluation of the moldability were performed in the same manner as in Example 1.

The results are shown in Table 1.

[Comparative Example 3]

The molded product was obtained in the same manner as in Example 1 except that acetone was used instead of the aromatic compound. Further, the evaluation of the test force at crushing and the evaluation of the moldability were performed in the same manner as in Example 1.

The results are shown in Table 1.

[Table 1]

|  | Example 1 | Comparative Example 1 | Comparative Example 2 | Comparative Example 3 |
|---|---|---|---|---|
| Aggregate (parts by mass) | 85 | 85 | 85 | 85 |
| Binder (parts by mass) | 15 | 15 | 15 | 15 |
| Aromatic compound (parts by mass) | 2.3 | - | - | - |
| Water (parts by mass) | - | - | 3.0 | - |
| Acetone (parts by mass) | - | - | - | 3.0 |
| Dispersant (parts by mass) | 3.0 | 3.0 | 3.0 | 3.0 |
| Density of test piece (g/cm$^3$) | 1.13 | 1.10 | 1.15 | 1.14 |
| Test piece at crushing (N) | 2.2 | 1.2 | 1.3 | 1.4 |
| Moldability | 5 | 1 | 2 | 4 |

[Example 2]

A mixture was prepared in the same manner as in Example 1 except that methylnaphthalene was used as the aromatic compound, and 3% by mass of methylnaphthalene was included with respect to the total 100% by mass of the aggregate and the binder. Then, the resulting mixture was molded under conditions of a surface pressure of 10 MPa and a processing time of 10 seconds to obtain a molded product with a long side of 140 mm and a short side of 30 mm.

[Example 3]

A mixture was prepared and further a molded product was obtained in the same manner as in Example 2 except that 10% by mass of methylnaphthalene was included with respect to the total 100% by mass of the aggregate and the binder.

[Example 4]

A mixture was prepared and further a molded product was obtained in the same manner as in Example 2 except that 15% by mass of methylnaphthalene was included with respect to the total 100% by mass of the aggregate and the binder.

The density of the molded product in Example 2 was 1.13 g/cm$^3$, the density of the molded product in Example 3 was 1.21 g/cm$^3$, and the density of the molded product in Example 4 was 1.23 g/cm$^3$.

Further, the molded products was evaluated for the moldability based on the evaluation criteria described above (evaluation of moldability). In Examples 2 to 4, the numerical value was 5, indicating good moldability.

[Example 5]

(1) Formation of molded product

Green needle coke that has not been heat treated was used as the raw material instead of calcined needle coke, and aggregate with the average particle size of 9 μm and the standard deviation of the particle size distribution of 0.15 was prepared. Further, the binder which was the same as in Example 1, an aromatic compound (methylnaphthalene-containing additive) and a dispersant were used as raw materials, and they were mixed in the proportions shown in Table 2 to prepare a mixture. Then, the obtained mixture was molded at room temperature under the molding pressure (unit: N) shown in FIG. 1 to obtain three kinds of molded products each having a long side of 52.1 mm and a short side of 11.4 mm. The densities (g/cm$^3$) of the three molded products in Example 5 are as indicated by the dots in FIG. 1. In FIG. 1, the vertical axis represents the density of the molded product before the heat treatment or after the heat treatment, and the horizontal axis represents the molding pressure when preparing the molded product, in other words, the molding pressure before the heat treatment.

In order to remove an organic component that was contained in the molded product and that did not contribute to the graphitization, each of the three molded products obtained in Example 5 was heat-treated at 900°C. The densities (g/cm$^3$) of the three molded products after the heat treatment in Example 5 are as indicated by the dots in FIG. 1.

[Example 6]

The same test as in Example 5 was performed except that the content rate of the methylnaphthalene-containing additive was changed into 7% by mass with respect to the total 100% by mass of the aggregate and the binder in Example 5 and the molding pressure of the mixture was changed into the value indicated in FIG. 1. The densities (g/cm$^3$) of the three molded products before or after the heat treatment in Example 6 are as indicated by the dots in FIG. 1.

[Example 7]

The same test as in Example 5 was performed except that the content rate of the methylnaphthalene-containing additive was changed into 15% by mass with respect to the total 100% by mass of the aggregate and the binder in Example 5 and the molding pressure of the mixture was changed into the value indicated in FIG. 1. The densities (g/cm$^3$) of the three molded products before or after the heat treatment in Example 7 are as indicated by the dots in FIG. 1.

[Example 8]

The same test as in Example 5 was performed except that the content rate of the methylnaphthalene-containing additive was changed into 30% by mass with respect to the total 100% by mass of the aggregate and the binder in Example 5 and the molding pressure of the mixture was changed into the value indicated in FIG. 1. The densities (g/cm$^3$) of the two molded products before or after the heat treatment in Example 8 are as indicated by the dots in FIG. 1.

As shown in FIG. 1, When the content rate of the methylnaphthalene-containing additive was the same, there was a tendency that the higher the molding pressure, the higher the density of the molded product after the heat treatment.

As shown in FIG. 1, the density of the molded product before the heat treatment at the same molding pressure tended to increase as the amount of the methylnaphthalene-containing additive increased. On the other hand, under the condition of the same molding pressure, even if the amount of the methylnaphthalene-containing additive was increased, the density of the molded product after the heat treatment did not tend to increase, and was not more than 1.0 g/cm$^3$ indicated by the dotted line.

From the above results, even if the density of the molded product before the heat treatment was greatly increased by adding the methylnaphthalene-containing additive or by increasing the amount of the additive, it can be confirmed that the density of the molded product after the heat treatment was not greatly increased. Furthermore, it is presumed that the density of the graphitized product does not significantly increase even if the graphitization treatment is performed thereafter. Therefore, it is considered that the increase in the density of the molded product before the heat treatment does not adversely affect the grinding process of the graphitized product (for example, the adverse effect that the specific surface area of the ground product increases due to the need for a larger force for grinding the graphitized product).

[Table 2]

|  | Example 5 | Example 6 | Example 7 | Example 8 |
|---|---|---|---|---|
| Aggregate (parts by mass) | 90 | 90 | 90 | 90 |

(continued)

|  | Example 5 | Example 6 | Example 7 | Example 8 |
|---|---|---|---|---|
| Binder (parts by mass) | 10 | 10 | 10 | 10 |
| Methylnaphthalene-containing additive (parts by mass) | 3 | 7 | 15 | 30 |
| Dispersant (parts by mass) | 5 | 5 | 5 | 5 |
| Moldability | 5 | 5 | 5 | 5 |

[Examples 9 to 11]

The binder, the methylnaphthalene-containing additive as the aromatic compound and the dispersant, which are shown in Example 1, were used as the raw materials except that green mosaic coke with the average particle size of 14 $\mu$m and the standard deviation of the particle size distribution of 0.22 that has not been heat treated was used as the aggregate instead of calcined needle coke, and these raw materials were mixed in the amounts (parts by mass) shown in Table 3 using a kneader to obtain each mixture. Then, the obtained mixture was molded by a uniaxial press at room temperature to obtain each molded product. Then, the obtained molded product was heat-treated at 800°C to 850°C for 8 hours in a nitrogen atmosphere, and then graphitized at 2600°C to 3100°C for 30 hours to obtain each graphitized product. The obtained graphitized product was ground to obtain graphite powders of each of Examples 9 to 11 (anode material for lithium-ion secondary battery).

The density ($g/cm^3$) of the molded product obtained in the above-mentioned step, the density ($g/cm^3$) of the graphitized product, D10 of the anode material, D50 of the anode material,

D90 of the anode material, the specific area surface ($m^2/g$) of the anode material, and the saturated tap density ($g/cm^3$) are shown in Table 3.

D10 and D90 are particle sizes at cumulative 10% and cumulative 90% when drawing a volume cumulative distribution curve from the small particle size side in the particle size distribution. D10 and D90 are values measured by a laser diffraction/scattering method.

The saturated tap density of the anode material was obtained as follows. First, 100 $cm^3$ of the sample powder was put into a graduated flat-bottomed test tube with a volume of 150 $cm^3$ (KRS-406, manufactured by Kuramochi Kagaku Kikai Seisakusho Co., Ltd.), and the graduated flat-bottomed test tube was stoppered. The saturated tap density of the anode material was obtained from the mass and volume of the sample powder after dropping this graduated flat-bottomed test tube 250 times from a height of 5 cm.

(Preparation of anode)

After mixing 96 parts by mass of the produced anode material, 1.5 parts by mass of styrene-butadiene rubber (BM-400B, manufactured by Zeon Corporation), 1.5 parts by mass of carboxymethyl cellulose (CMC1380, manufactured by Daicel Corporation) and 1.0 part by mass of carbon black (Superp, manufactured by imerys Graphite & Carbon), water was added to the thus obtained mixture for viscosity adjustment to obtain a composition. The obtained composition was applied to a current collector (copper foil having a thickness of 10 $\mu$m) so that the coating amount was 10 $mg/cm^2$, to form a composition layer. After the composition layer was pressured to form an electrode after pressurization, the thus obtained electrode was dried at 130°C for 8 hours using a vacuum dryer. The pressurization was performed so that the density after vacuum drying was 1.60 $g/cm^2$.

(3) Production of evaluation cell

The anode obtained above was punched into a circle with an electrode area of 1.54 $cm^2$, metallic lithium as a cathode, a mixed solution of ethylene carbonate/ethyl methyl carbonate (3/7 volume ratio) and vinylene carbonate (0.5% by mass) which contained 1.0 M $LiPF_6$ as an electrolyte solution, a polyethylene microporous membrane having a thickness of 25 $\mu$m as a separator, and a copper plate having a thickness of 230 $\mu$m as a spacer were used to produce a 2016 type coin cell, and this cell was used as an evaluation cell.

(Evaluation of battery characteristics)

The initial discharging capacity (Ah/kg) and initial charge and discharge efficiency (%) were measured by using the produced evaluation cell. Specifically, the evaluation cell was placed in a constant temperature bath kept at 25°C, charged with constant current at 0.53 mA until the voltage reached 0 V, and then further charged at a constant voltage of 0 V until the current attenuated to a value corresponding to 0.026 mA, and the initial charging capacity was measured. After charging, the cell was paused for 30 minutes and then discharged. The cell was discharged at 0.53 mA until the voltage reached 1.5 V, and the initial discharging capacity was measured. At this time, the capacities were converted per mass of the anode material used. The value obtained by dividing the initial discharging capacity by the initial charging capacity and then being multiplied by 100 was defined as the initial charge and discharge efficiency (%). The results are shown in Table 3.

[Table 1]

|  | Example 9 | Example 10 | Example 11 |
|---|---|---|---|
| Aggregate (parts by mass) | 85 | 80 | 75 |
| Binder (parts by mass) | 15 | 20 | 25 |
| Dispersant (parts by mass) | 5 | 5 | 5 |
| Methylnaphthalene-containing additive (parts by mass) | 5 | 5 | 5 |
| Density of molded product (g/cm$^3$) | 0.96 | 0.97 | 1.00 |
| Density of graphitized product (g/cm$^3$) | 1.20 | 1.25 | 1.30 |
| D10 of anode material ($\mu$m) | 8.8 | 7.5 | 5.5 |
| D50 of anode material ($\mu$m) | 18.8 | 18.5 | 17.3 |
| D90 of anode material ($\mu$m) | 36.4 | 33.2 | 35.1 |
| D10/D50 | 0.47 | 0.41 | 0.32 |
| Specific surface area of anode material (g/cm$^3$) | 2.48 | 5.91 | 6.74 |
| Saturated tap density (g/cm$^3$) | 0.98 | 0.98 | 0.9 |
| Initial discharging capacity (Ah/kg) | 348 | 340 | 332 |
| Initial charge and discharge efficiency (%) | 91.8 | 90 | 88.9 |

As shown in Table 3, it was confirmed that as the amount of the binder in the mixture decreased, the initial discharge capacity and initial charge and discharge efficiency of the battery produced using the anode material tended to increase.

Furthermore, by reducing the amount of the binder in the mixture, it tends to be possible to reduce an increase in the density of the graphitized product when the molded product is graphitized. Because the increase in the density of the graphited product is reduced, the graphited product can be easily ground, so it is considered that the dispersion of the particle size of the obtained ground product can also be reduced. It is presumed that the use of an anode material containing a ground product with a small variation in particle size in the production of a lithium-ion secondary battery tends to improve the quick charging performance of the lithium-ion secondary battery.

[Reference Examples 1 to 4]

(1) Preparation of anode material

Needle coke the raw material was finely ground using a free grinder mill manufactured by Nara Machinery Co., Ltd, and then wind-classified using Turboplex (registered trademark) manufactured by HOSOKAWA MICRON CORPORATION to prepare the aggregate shown below. Further, the materials shown below were used as the raw materials. The average particle sizes of the aggregate and the anode materials, and the standard deviation of the particle size distribution of the aggregate were measured by using the particle size distribution measuring device (Shimadzu Corporation, SALD-3000) using the laser diffraction/scattering method. The standard deviation of the particle size distribution of the aggregate was the standard deviation defined on the logarithmic scale.

Aggregate 1: Needle coke with average particle size of 14 $\mu$m and standard deviation of particle size distribution of 0.15
Binder: Tar pitch
Dispersant: Stearic acid

The aggregate, the binder and the like, which were the raw materials shown in Table 4, were mixed in the amounts (parts by mass) described in Table 4 using a kneader to obtain each mixture. Then, the obtained mixture was molded by a uniaxial press at room temperature to obtain each molded product. Then, the obtained molded product was heat-treated at 800°C to 850°C for 8 hours in a nitrogen atmosphere, and then graphitized at 2600°C to 3100°C for 30 hours to obtain each graphitized product. The obtained graphitized product was ground to obtain graphite powders of each of Reference Examples 1 to 4 (anode material for lithium-ion secondary battery).

The density (g/cm$^3$) of the molded product obtained in the above-mentioned step, the density (g/cm$^3$) of the graphitized product, and the average particle size ($\mu$m), the specific surface area (m$^2$/g), and the saturated tap density (g/cm$^3$) of the anode material are shown in Table 4.

The ground product obtained in each Reference Example included secondary particles that were aggregated or bonded such that the main surfaces of the graphite particles, which were the graphitized product of the aggregate, were not parallel to each other.

(2) Production of anode and evaluation of orientation index

After mixing 96 parts by mass of the produced anode material, 1.5 parts by mass of styrene-butadiene rubber (BM-400B, manufactured by Zeon Corporation), 1.5 parts by mass of carboxymethyl cellulose (CMC1380, manufactured by Daicel Corporation) and 1.0 part by mass of carbon black (Superp, manufactured by imerys Graphite & Carbon), water was added to the thus obtained mixture for viscosity adjustment to obtain a composition. The obtained composition was applied to a current collector (copper foil having a thickness of 10 $\mu$m) so that the coating amount was 10 mg/cm$^2$, to form a composition layer. After the composition layer was pressured to form an electrode after pressurization, the thus obtained electrode was dried at 130°C for 8 hours using a vacuum dryer. The pressurization was performed so that the density after vacuum drying was 1.60 g/cm$^2$. The orientation index of the produced anode was evaluated by the above-mentioned method.

(3) Production of evaluation cell

The anode obtained above was punched into a circle with an electrode area of 1.54 cm$^2$, metallic lithium as a cathode, a mixed solution of ethylene carbonate/ethyl methyl carbonate (3/7 volume ratio) and vinylene carbonate (0.5% by mass) which contained 1.0 M LiPF$_6$ as an electrolyte solution, a polyethylene microporous membrane having a thickness of 25 $\mu$m as a separator, and a copper plate having a thickness of 230 $\mu$m as a spacer were used to produce a 2016 type coin cell, and this cell was used as an evaluation cell.

(4) Evaluation of battery characteristics

The initial discharging capacity (Ah/kg) and initial charge and discharge efficiency (%) were measured by using the produced evaluation cell. Specifically, the evaluation cell was placed in a constant temperature bath kept at 25°C, charged with constant current at 0.53 mA until the voltage reached 0 V, and then further charged at a constant voltage of 0 V until the current attenuated to a value corresponding to 0.026 mA, and the initial charging capacity was measured. After charging, the cell was paused for 30 minutes and then discharged. The cell was discharged at 0.53 mA until the voltage reached 1.5 V, and the initial discharging capacity was measured. At this time, the capacities were converted per mass of the anode material used. The value obtained by dividing the initial discharging capacity by the initial charging capacity and then being multiplied by 100 was defined as the initial charge and discharge efficiency (%). The results are shown in Table 4.

(5) Evaluation of quick charging capacity retention rate

The anode obtained above was punched into a circle with an electrode area of 2.00 cm$^2$, and an electrode, in which lithium cobalt oxide was applied to aluminum foil, as a cathode, a mixed solution of ethylene carbonate/ethyl methyl carbonate (3/7 volume ratio) and vinylene carbonate (0.5% by mass) which contained 1.0 M LiPF$_6$ as an electrolyte solution, a polyethylene microporous membrane having a thickness of 25 $\mu$m as a separator, and a spring spacer as a spacer were used to produce a 2016 type coin cell. This coin cell was used as an evaluation cell.

Aging treatment before the quick charging test was performed using the produced evaluation cell. Specifically, the evaluation cell was placed in a constant temperature bath kept at 25°C, charged with a constant current at 0.92 mA until the voltage reached 4.2 V, and then further charged at a constant voltage of 4.2 V until the current attenuated to a value corresponding to 0.046 mA. After charging, the cell was paused for 10 minutes and then discharged at 0.92 mA until the voltage reached 2.75 V. This charging and discharging was repeated for 5 cycles.

The quick charging test was performed using the aged evaluation cell. Specifically, the evaluation cell was placed in a constant temperature bath kept at 25°C, charged with a constant current at 0.92 mA until the voltage reached 4.2 V, and the charging capacity (1) was measured. After charging, the cell was paused for 10 minutes and then discharged. The cell was discharged at 4.6 mA until the voltage reached 2.75 V. Further, the cell was charged with constant current at 6.9 mA until the voltage reached 4.2 V, and the charging capacity (2) was measured. After charging, the cell was paused for 10 minutes and then discharged at 4.6 mA until the voltage reached 2.75 V.

The value obtained by dividing the charging capacity (2) by the charging capacity (1) and then being multiplied by 100 was defined as the quick charging capacity retention rate (%). The results are shown in Table 4.

(6) Evaluation of battery life

An evaluation cell was prepared and the evaluation cell was aged in the same manner as the above-mentioned (5). A cycle test was performed and evaluation of a battery life was performed using the aged evaluation cell. Specifically, the evaluation cell was placed in a constant temperature bath kept at 25°C, charged with a constant current at 4.6 mA until the voltage reached 4.2V, and then further charged at a constant voltage of 4.2 V until the current attenuated to a value corresponding to 0.046 mA. After charging, the cell was paused for 10 minutes, then was discharged at 4.6 mA until the voltage reached 2.75 V, and the initial discharging capacity was measured. This charging and discharging was further repeated for 299 cycles and the discharging capacity at the 300th cycle was measured.

The value obtained by dividing the discharging capacity at the 300th cycle by the initial discharging capacity and then being multiplied by 100 was defined as the battery life retention rate (%). The results are shown in Table 4.

[Table 4]

| | Reference Example 1 | Reference Example 2 | Reference Example 3 | Reference Example 4 |
|---|---|---|---|---|
| Aggregate (parts by mass) | 85 | 85 | 80 | 85 |
| Binder (parts by mass) | 15 | 15 | 20 | 15 |
| Dispersant (parts by mass) | 3 | 3 | 3 | 3 |
| Density of molded product (g/cm$^3$) | 0.8 | 1 | 1 | 1.4 |
| Density of graphitized product (g/cm$^3$) | 0.75 | 0.9 | 0.95 | 1.35 |
| Average particle size of anode material ($\mu$m) | 19.3 | 20.1 | 19.5 | 20.4 |
| Specific surface area of anode material (g/cm$^3$) | 1.5 | 1.8 | 1.8 | 2.8 |
| Saturated tap density (g/cm$^3$) | 1.11 | 1.08 | 1.07 | 1.05 |
| Orientation index | 13.1 | 14.8 | 14.9 | 15.6 |
| Initial discharging capacity (Ah/kg) | 347 | 345 | 343 | 345 |
| Initial charge and discharge efficiency (%) | 93.7 | 93.5 | 93.3 | 93.3 |
| Quick charging capacity retention rate (%) | 80.0 | 76.7 | 78.6 | 73.5 |
| Battery life retention rate (%) | 92.1 | 91.4 | 91.5 | 89.1 |

As shown in Table 4, the evaluation cells produced by using each of the molded products with the smaller density in Reference Examples 1 to 3 showed better evaluation of the quick charging capacity retention rate and the battery life retention rate as compared with the evaluation cell produced by using the molded product with the larger density in Reference Example 4.

The disclosure of PCT/JP2021/003588 filed on February 1, 2021 is incorporated herein by reference in their entirety.

All publications, patent applications, and technical standards mentioned in the present specification are incorporated herein by reference to the same extent as if each individual publication, patent application, or technical standard was specifically and individually indicated to be incorporated by reference.

**Claims**

1. A method of manufacturing an anode material for a lithium-ion secondary battery, the method comprising:

   (a) a step of obtaining a mixture containing a graphitizable aggregate, a graphitizable binder, and an aromatic compound;
   (b) a step of obtaining a molded product with a density of 1.3 g/cm$^3$ or less by molding the mixture;
   (c) a step of obtaining a graphitized product by graphitizing the molded product; and
   (d) a step of obtaining a ground product by grinding the graphitized product.

2. The method of manufacturing an anode material for a lithium-ion secondary battery according to claim 1, wherein the aromatic compound includes one compound selected by the group consisting of naphthalene, methylnaphthalene, acenaphthene, biphenyl, fluorene, benzopyrene, benzanthracene, dibenzanthracene, diphenylene oxide, quinoline and isoquinoline.

3. The method of manufacturing an anode material for a lithium-ion secondary battery according to claim 1 or 2, wherein a content of the aromatic compound in the mixture is from 1 % by mass to 20 % by mass with respect to a total of 100 % by mass of the aggregate and the binder.

4. The method of manufacturing an anode material for a lithium-ion secondary battery according to any one of claims 1 to 3, wherein a content of the binder in the mixture is 25 % by mass or less with respect to a total of 100 % by mass of the aggregate and the binder.

5. The method of manufacturing an anode material for a lithium-ion secondary battery according to any one of claims 1 to 3, wherein a content of the binder in the mixture is 15 % by mass or less with respect to a total of 100 % by mass of the aggregate and the binder.

6. The method of manufacturing an anode material for a lithium-ion secondary battery according to any one of claims 1 to 5, wherein a content of the aromatic compound in the mixture is from 1.5 % by mass to 20 % by mass with respect to a total of 100 % by mass of the aggregate and the binder.

7. The method of manufacturing an anode material for a lithium-ion secondary battery according to any one of claims 1 to 6, wherein a specific surface area of the ground product that is an anode material for a lithium-ion secondary battery is 2.8 m$^2$/g or less.

8. A method of manufacturing a lithium-ion secondary battery, the method comprising a step of producing an anode by using an anode material obtained by the method of manufacturing an anode material for a lithium-ion secondary battery according to any one of claims 1 to 7.

9. A method of manufacturing a lithium-ion secondary battery, the method comprising: a step of manufacturing an anode material by the method of manufacturing an anode material for a lithium-ion secondary battery according to any one of claims 1 to 7; and a step of producing an anode by using the anode material for a lithium-ion secondary battery.

# FIG.1

**EP 4 148 824 A1**

## INTERNATIONAL SEARCH REPORT

| International application No. |
|---|
| **PCT/JP2021/035452** |

### A. CLASSIFICATION OF SUBJECT MATTER

*H01M 4/1393*(2010.01)i; *H01M 4/583*(2010.01)i; *H01M 10/058*(2010.01)i
FI:   H01M4/583; H01M4/1393; H01M10/058

According to International Patent Classification (IPC) or to both national classification and IPC

### B. FIELDS SEARCHED

Minimum documentation searched (classification system followed by classification symbols)

H01M4/1393; H01M4/583; H01M10/058

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

JSTPlus (JDreamIII)

### C. DOCUMENTS CONSIDERED TO BE RELEVANT

| Category* | Citation of document, with indication, where appropriate, of the relevant passages | Relevant to claim No. |
|---|---|---|
| Y | JP 2014-089887 A (HITACHI CHEMICAL CO LTD) 15 May 2014 (2014-05-15) paragraphs [0014]-[0032], [0038], [0087]-[0096], [0106] | 1-9 |
| Y | JP 10-112319 A (PETOCA KK) 28 April 1998 (1998-04-28) paragraph [0058] | 1-9 |
| A | JP 10-284062 A (NIPPON STEEL CORP) 23 October 1998 (1998-10-23) paragraph [0009] | 1-9 |
| A | WO 2014/119776 A1 (SHOWA DENKO K.K) 07 August 2014 (2014-08-07) paragraphs [0075]-[0076], [0096] | 1-9 |
| A | JP 2012-124114 A (HITACHI CHEMICAL CO LTD) 28 June 2012 (2012-06-28) paragraphs [0092]-[0093] | 1-9 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **15 November 2021** | **30 November 2021** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT
### Information on patent family members

International application No.

**PCT/JP2021/035452**

| Patent document cited in search report | | | Publication date (day/month/year) | Patent family member(s) | Publication date (day/month/year) |
|---|---|---|---|---|---|
| JP | 2014-089887 | A | 15 May 2014 | (Family: none) | |
| JP | 10-112319 | A | 28 April 1998 | (Family: none) | |
| JP | 10-284062 | A | 23 October 1998 | (Family: none) | |
| WO | 2014/119776 | A1 | 07 August 2014 | US    2015/0364751    A1<br>paragraphs [0127], [0165]<br>CN    104969389    A<br>KR  10-2015-0103219    A | |
| JP | 2012-124114 | A | 28 June 2012 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015147012 A

- JP 2021003588 W